# EUROPÄISCHE PATENTSCHRIFT

(11) **EP 3 403 010 B1**
(45) Veröffentlichungstag und Bekanntmachung des Hinweises auf die Patenterteilung: **01.04.2020**
(21) Anmeldenummer: 16810264.8
(22) Anmeldetag: 23.11.2016
(51) Int. Cl.: F16K 11/048, F16K 27/02, F16K 31/42, B60T 8/36, B60T 15/02

(54) **ELEKTROMAGNETISCHE VENTILVORRICHTUNG,VERWENDUNG EINER SOLCHEN UND SYSTEM**
ELECTROMAGNETIC VALVE DEVICE, USE THEREOF, AND SYSTEM
ENSEMBLE VANNE ÉLECTROMAGNÉTIQUE, SON UTILISATION ET SYSTÈME

(30) Priorität: 14.01.2016 DE 202016100164 U
(43) Veröffentlichungstag der Anmeldung: 21.11.2018
(73) Patentinhaber: ETO MAGNETIC GmbH, 78333 Stockach (DE)
(72) Erfinder: THODE, Oliver, 78333 Stockach (DE); RAFF, Viktor, 78467 Konstanz (DE)
(74) Vertreter: Patentanwälte Behrmann Wagner PartG mbB
(86) Internationale Anmeldenummer: PCT/EP2016/078512
(87) Internationale Veröffentlichungsnummer: WO 2017/121523

(56) Entgegenhaltungen:
- DE-B3-102006 011 578
- FR-A1- 2 660 726
- US-A- 3 347 259

## Beschreibung

Die vorliegende Erfindung betrifft eine elektromagnetische Ventilvorrichtung nach dem Oberbegriff des Hauptanspruchs. Ferner betrifft die vorliegende Erfindung eine Verwendung einer derartigen elektromagnetischen Ventilvorrichtung, und die vorliegende Erfindung betrifft ein System aufweisend mindestens zwei der gattungsgemäßen elektromagnetischen Ventilvorrichtungen.

Aus dem Stand der Technik sind gattungsgemäße Ventilvorrichtungen in Form sogenannter vorgesteuerter Elektromagnetventilen allgemein bekannt. Bei dieser auch als "Booster-Technologie" bekannten Ausgestaltung eines Elektromagnetventils wirkt ein in ansonsten bekannter Weise bei elektromagnetischen Stellmitteln als Reaktion auf eine Bestromung stationärer Spulenmittel bewegbarer Anker nicht unmittelbar zum Öffnen bzw. Schließen eines Fluidströmungspfades mit einem Ventilsitz zusammen, mit welchem dann in üblicher Weise ein Fluidfluss vom Fluideingangsanschluss (auch als "Druckanschluss" bezeichnet) zum Arbeitsanschluss freigegeben oder gesperrt würde. Vielmehr bewirken die elektromagnetischen Stellmittel, dass das eintretende Fluid zum Betätigen der im Ventilgehäuse in einer axialen Richtung verstellbar geführten Sperrmittel fließt, dadurch, dass das (druckbehaftete) Fluid auf eine geeignete Druckfläche des typischerweise stößelartig ausgebildeten Sperrmittels greift. Technischer Vorteil derartiger vorgesteuerter Ventile ist, dass damit eine Vergrößerung von zu schaltenden (Nenn-) Weiten eines Fluiddurchmessers ermöglicht ist, während demgegenüber eine deutlich verringerte Nennweite für die Vorsteuerung notwendig ist. In der praktischen Realisierung und um insoweit das Fluid auf die Druckfläche zu bringen, sind gattungsgemäße, als solche bekannte elektromagnetische Stellmittel üblicherweise als sogenannte Vorsteuerventile ausgeführt. Ein konzeptuelles Beispiel verdeutlicht etwa die DE 10 2008 031 024 A1.

Nicht zuletzt aufgrund ihrer Eignung für verschiedenste (Pneumatik-) Funktionalitäten sind gattungsbildende Ventile typischerweise als Einzelventile ausgestaltet, wobei einem Ventilaußengehäuse sowohl die Fluid(Luft-)anschlüsse (Fluideingangsanschluss sowie Arbeitsanschluss, zusätzlich häufig auch ein Entlüftungsanschluss, so dass ein 3/2 Wegeventil entsteht) als auch ein elektrischer Anschluss für die elektromagnetischen Stellmittel integriert bzw. zugeordnet sind. Derartige, sogenannte "stand alone-Ventile" werden gerade in einem Nutzfahrzeugkontext als Pneumatikventile für verschiedenste Schaltaufgaben eingesetzt.

Abhängig von einem jeweiligen Einsatzzweck eines gattungsgemäßen elektromagnetischen und vorgesteuerten Schaltventil sind dabei sowohl Ausführungen bekannt und üblich, bei welchen das Ventil in der Nullstellung (d.h. im unbestromten Zustand der stationären Wicklung und damit im unbetätigtem Zustand der elektromagnetischen Stellmittel) geschlossen sind, als auch bei einer solchen Nullstellung für das Fluid geöffnet sind. Praktisch werden diese Funktionalitäten im Rahmen der gattungsgemäßen Vorsteuer- bzw. Booster-Technologie dadurch gelöst, dass die Kraftspeichermittel (üblicherweise eine Druckfeder) an die Sperrmittel (Stößel) angreifen und, abhängig von einer jeweiligen konstruktiven Ausführung, auf diese Weise eine Rückstellung (und damit auch stromlose Position) in einer Ventil-Öffnungsstellung oder einer Ventil-Verschlussstellung bewirken. Eine in der Nullstellung geschlossene Ventilrealisierung wird dabei auch als "NC" (=normally closed) bezeichnet, ein in der Nullstellung offenes Ventil als "NO" (=normally opened).

Allerdings unterscheidet sich die konstruktive Realisierung eines gattungsgemäßen Ventils in Abhängigkeit von einer NO- oder NC-Ausführung, insbesondere im Hinblick auf eine konkrete Ausgestaltung des Ventilgehäuses im Zusammenspiel mit den darin bewegbar angetriebenen Sperrmitteln (welche dann ja in vorbeschriebener Weise vorgesteuert werden). Im Hinblick auf eine Flexibilität in Fertigung und im Einsatz erzeugt dies zusätzlichen Aufwand, denn es müssen zumindest zwei verschiedene konstruktive Varianten (auch im Hinblick auf die Komponenten) vorgehalten werden, um entsprechend bedarfsgerecht reagieren zu können (alternativ müssten jeweilige Anschlüsse vertauscht werden, was bei verkettbaren NC/NO-Ventilen zu unterschiedlichen Gehäusen führt oder dazu führt, dass jeweils nur NC-Ventile bzw. nur NO-Ventile verkettbar sind). Dieses Problem wird zusätzlich verschärft durch den Umstand, dass - abhängig von den Vorgaben der Kraftfahrzeughersteller - typischerweise genormte Befestigungs- und Montagebedingungen an einem Montageort vorherrschen, welche gleichermaßen eine notwendige Außengestaltung der Ventilvorrichtung vorgeben bzw. bedingen - üblicherweise zudem in einem von Platzmangel geprägten Umfeld. Im Ergebnis multipliziert sich so die Notwendigkeit für Ventilhersteller mit flexiblem Nachfragespektrum, jeweils für einen gewünschten Bedarfsfall geeignete Ventilkomponenten, eingeschlossen einer für NC und NO ausgestalteten Gehäusegeometrie, vorrätig zu halten.

Aus dem gattungsbildenden Stand der Technik ist zudem auch die US 3 347 259 A bekannt, die eine elektromotorische Ventilvorrichtung offenbart, die im Ventilgehäuse verstellbar geführte Sperrmittel umfasst.

Aufgabe der vorliegenden Erfindung ist es daher, eine gattungsgemäße Ventilvorrichtung im Hinblick auf ihre Flexibilität in der Fertigbarkeit und insbesondere in ihrer Eignung zur flexiblen Anpassbarkeit an verschiedenste Bedingungen im Hinblick auf ein Ventilverhalten im unbestromten Zustand zu verbessern, dabei insbesondere eine elektromagnetische Ventilvorrichtung zu schaffen, welche sowohl konstruktiv vereinfacht ist, als auch auf einfache Weise als NO- sowie NC-Ventil ausgestaltet werden kann.

Vorteilhafte Weiterbildungen der Erfindung sind in den Unteransprüchen beschrieben. Erfindungsgemäß zusätzlich wird Schutz beansprucht für eine Verwendung einer derartigen elektromagnetischen Ventilvorrichtung als Pneumatikventil, und es ist im Rahmen der vorliegenden Erfindung ein System aufweisend mindestens zwei der erfindungsgemäßen elektromagnetischen Ventilvorrichtungen beansprucht, wobei jede dieser Ventilvorrichtungen erfindungsgemäß Fluideingangsanschlüsse fluidleitend miteinander verbunden aufweist, und wobei diese Verbindung durch eine jedem Ventilgehäuse zugeordnete, quer zur axialen Richtung verlaufende und zum Ankoppeln an jeweils benachbarte der Ventilvorrichtungen eingerichtete Querbohrung realisiert ist.

Damit lässt sich dann erfindungsgemäß vorteilhaft und zusätzlich eine kompakte einfach und effizient zu beschaltende sowie konstruktiv einfach zu realisierende Mehrfachanordnung aus Ventilen aufbauen.

In erfindungsgemäß vorteilhafter Weise nutzt die vorliegende Erfindung zunächst die Möglichkeit, den Ventilsitz erfindungsgemäß zweiteilig und (axial) zweiseitig so auszugestalten, dass die Sperrmittel durch ihre axiale Bewegung im Ventilgehäuse alternativ diesen ersten Öffnungsbereich oder den gegenüberliegenden zweiten Öffnungsbereich schließen bzw. freilegen können. Üblicherweise weisen zu diesem Zweck die Sperrmittel jeweils geeignet eingesetzte bzw. fluchtend auf den ersten bzw. zweiten Öffnungsbereich ausgerichtete Polymer-Dichtflächen auf, um diesen Effekt zu bewirken.

Die dadurch prinzipiell erreichbare Symmetrie entlang der axialen Richtung ermöglicht es dann in der erfindungsgemäßen Weise, das (im Ventilaußengehäuse aufgenommene) Ventilgehäuse in (mindestens) zwei Relativ- bzw. Aufnahmepositionen zu verwenden, wobei hierdurch insbesondere die Realisierbarkeit sowohl einer NC-Ventilfunktionalität (die Rückstellkraft, etwa bewirkt durch eine geeignet an die Sperrmittel angreifende Rückstellfeder, verschließt im unbestromten Zustand des Vorsteuerventils den Fluidströmungspfad) als auch einer NO-Funktionalität (bei nicht aktiviertem Vorsteuerventil ist der Fluidströmungspfad zwischen dem Arbeitsanschluss und dem Fluideingangsanschluss geöffnet) ermöglicht ist, je nach Aufnahmeposition. Dies geschieht im Rahmen der Erfindung lediglich durch das Ändern der erfindungsgemäßen Aufnahmeposition, wobei eine bevorzugte Realisierung der Erfindung vorsieht, dass das (zu diesem Zweck geeignet modulartig und damit einsetz- bzw. einsteckbar ausgebildete Ventilgehäuse) in einer Ebene verkippt wird, welche senkrecht zur axialen Richtung verläuft.

In der praktischen Konsequenz führt dies dazu, dass sowohl NO-Ventilvorrichtungen, als auch NC-Ventilvorrichtungen mit einer gemeinsamen Baugruppe nämlich dem erfindungsgemäßen Ventilgehäuse, in einem Außengehäuse realisiert werden können, lediglich durch ein verändertes Einsetzen bzw. ein Umstecken des Ventilgehäuses relativ zum Ventilaußengehäuse.

Zuleitungen, insbesondere für den Fluideingangsanschluss und für den Arbeitsanschluss, bleiben ebenso ungeändert, wie die bevorzugt und vorteilhaft als separate Baugruppe ausführbaren elektromagnetischen Stellmittel zur Realisierung des Vorsteuerventils.

Erfindungsgemäß weiterbildend weist das modular ausgebildete Ventilgehäuse zumindest abschnittweise eine zylindrische Außenkontur auf, die zum passenden Zusammenwirken mit einer gleichermaßen zumindest abschnittsweise hohlzylindrisch ausgebildeten Innenwand des Ventilaußengehäuses ausgebildet ist. Auf diese Weise lässt sich der erfindungsgemäße Modulgedanke in Form einer einfachen Montierbarkeit realisieren.

In erfindungsgemäß besonders günstiger Weise wird die erfindungsgemäße Umsteck- bzw. Umsetzbarkeit des Ventilgehäuses relativ zum Ventilaußengehäuse zwischen der ersten und der zweiten Aufnahmeposition ermöglicht durch ein Dichtverhalten zwischen der äußeren Mantelfläche des Ventilgehäuses und der gegenüberliegenden inneren Fläche des Ventilaußengehäuses - und zwar ist dort insbesondere der Arbeitsanschluss vom Fluideingangsanschluss druckmäßig zu trennen. In weiterbildungsgemäß vorteilhafter Weise geschieht dies dadurch, dass in oder auf der äußeren Mantelfläche des Ventilgehäuses Dichtmittel vorgesehen sind, wobei diese Dichtmittel im Rahmen einer bevorzugten Ausführungsform in Form eines sich schräg über die äußere Mantelfläche erstreckenden Dichtrings realisiert sein können; dieser Dichtring, etwa in einer geeignet vorgesehenen Nut gehalten, bewirkt dann in konstruktiv einfacher und montagetechnisch günstiger Weise die notwendige Dichtung. Ergänzend oder alternativ können etwa mantelseitig am Ventilgehäuse Dichtabschnitte vorgesehen sein (weiter bevorzugt auch an oder in die Mantelfläche integriert sein, etwa im Wege eines Mehrkomponenten-Spritzgussverfahrens bei Realisierung des Ventilgehäuses aus einem harten Kunststoffmaterial und der Dichtmittel aus gummielastischem Polymermaterial), wobei hier dann auch andere, komplexere Dichtungsverläufe ermöglicht sind und etwa entsprechend optimierten Fertigungsbedingungen vorgegeben sein können.

Insbesondere die weiterbildungsgemäß vorteilhafte Kunststoff-Spritzgusstechnologie ermöglicht es auch, das kompakte, modulartige Ventilgehäuse großserientauglich und preisgünstig herzustellen, dabei gleichzeitig - etwa im Hinblick auf die komplexe Funktionalität des Ventilsitzes mit erstem und gegenüberliegendem zweitem Öffnungsgebereich - die notwendigen Fluidströmungsverläufe im Ventilgehäuse durch geeignete Kanalausbildung in diesem Kunststoffkörper sicherzustellen. Vorteilhafter Effekt ist nicht nur die erfindungsgemäße Umsteckbarkeit und dabei Variabilität in der Fertigung zwischen NO- und NC-Funktionalitäten, auch lässt sich in allen Varianten der in axialer Richtung benötigte Bauraumaufwand minimieren, bis hin zu dem vorteilhaften Effekt, dass innerhalb einer zur Verfügung stehenden Breite des Ventilgehäuses bzw. des Ventilaußengehäuses und angesichts üblicherweise am Außengehäuse vorgesehener (genormter) Befestigungsbohrungen oder dgl. Fixierungsmittel, eine bestmögliche Eintragsfläche (maximierte Stirnfläche) für den vorgesteuerten Fluiddruck angeboten werden kann.

Eine besonders bevorzugte Realisierung der Erfindung ist es zudem, wenn, über den Fluideingangsanschluss und den Arbeitsanschluss hinaus, das Ventilgehäuse zusätzlich einen Entlüftungsanschluss bereitstellt, welcher insbesondere so ausgebildet bzw. schaltbar ist, dass in einem Sperrzustand des Ventils (und damit bei unterbrochenem Fluidfluss vom Fluideingangsanschluss) der Arbeitsanschluss zum Entlüftungsanschluss für Fluid durchverbunden ist.

Damit eignet sich dann die vorliegende Erfindung in herausragender Weise für verschiedenste Anwendungen als Pneumatikventil in einem (Nutz-) Fahrzeugkontext, die vorliegende Erfindung ist jedoch weder auf diesen Einsatzbereich beschränkt, noch ist Pneumatikfluid die ausschließlich im Rahmen der Erfindung mögliche Variante. Schließlich ermöglicht eine im Rahmen des erfindungsgemäßen Systems vorteilhafte Ausgestaltung der Erfindung, dass, über eine Verwendung erfindungsgemäßer Ventilvorrichtungen als Einzelventile hinaus, diese geeignet als Mehrventilanordnung miteinander verbunden werden können (wobei zu diesem Zweck etwa auch die erwähnten, im Außengehäuse vorgesehenen Befestigungsbohrungen geeignet fluchtend mechanisch durchverbunden sein können). Ergänzend sieht die Erfindung vorteilhaft vor, jedem Einzelventil eine (typischerweise quer zur axialen Richtung verlaufende und zum Fluideingangsanschluss geöffnete) Durchgangsbohrung zuzuordnen, welche, bezogen auf eine Anordnung benachbarter der erfindungsgemäßen Ventile, auch das fluidmäßige Durchkontaktieren der Ventile jeweils auf der Eingangsseite ermöglicht. Dann ist es lediglich noch notwendig, ein erstes Ventil dieser Anordnung mit einem Fluidzufluss am Eingangsanschluss zu versehen, die weiteren Ventile würden dann entsprechend druckmäßig durchverbunden und lediglich das letzte Ventil dieser Anordnung würde dann endseitig einen Verschluss bzw. eine Sperre dieses Durchgangskanals aufweisen.

Im Ergebnis ermöglicht es damit die Erfindung, in konstruktiv überraschend einfacher und eleganter Weise die Komplexität bei der Herstellung mehrerer Varianten gattungsgemäßer vorgesteuerter Elektromagnetventile deutlich zu reduzieren, wobei, über die erforderliche Notwendigkeit spezifischer Baugruppen insbesondere für NO- und NC-Technologien hinaus, vor allem auch signifikante axiale (und radiale) Bauraumvorteile bzw. Raumausnutzungsvorteile realisierbar sind.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in
- Fig. 1, 2: mit Teilbildern Fig. 1(a), (b), Fig. 2(a), (b) Schnittansichten einer elektromagnetischen Ventilvorrichtung gemäß einer ersten Ausführungsform der Erfindung in einer Montageform als in Nullstellung geschlossenes (NC) 3/2-Wegeventil, wobei die Darstellungen der Fig. 1 die unbestromte Position (Nullstellung) und die Darstellungen der Fig. 2 die vorgesteuerte bzw. in Schaltstellung bestromte und angesteuerte Position darstellen;
- Fig. 3, 4: mit Teilbildern Fig. 3(a), (b), Fig. 4(a), (b) Schnittansichten einer elektromagnetischen Ventilvorrichtung gemäß der ersten Ausführungsform der Erfindung in einer Montageform als in Nullstellung offenes (NO) 3/2-Wegeventil, wobei die Darstellungen der Fig. 3 die unbestromte Position (Nullstellung) und die Darstellungen der Fig. 4 die vorgesteuerte bzw. in Schaltstellung bestromte und angesteuerte Position darstellen;
- Fig. 5: mit Teildarstellungen Fig. 5(a) bis (d) verschiedene Ansichten des modulartig und dreh- bzw. umsteckbar ausgebildeten Ventilgehäuses zum Realisieren der Ventilvorrichtung des ersten Ausführungsbeispiels der Fig. 1 bis 4;
- Fig. 6: eine Perspektivansicht einer alternativen Ausgestaltung eines Ventilgehäuses, insbesondere durch eine variierte Ausgestaltung mantelseitiger Dichtungen zum Ventilgehäuse der Fig. 5, und
- Fig. 7: eine schematische Längsschnittansicht durch zwei als System miteinander verkoppelte elektromagnetische Ventilvorrichtungen gemäß einem weiteren Ausführungsbeispiel der vorliegenden Erfindung, zusätzlich illustrierend eine mögliche Außengehäuse-Ausgestaltung bzw. Kontaktinfrastruktur.

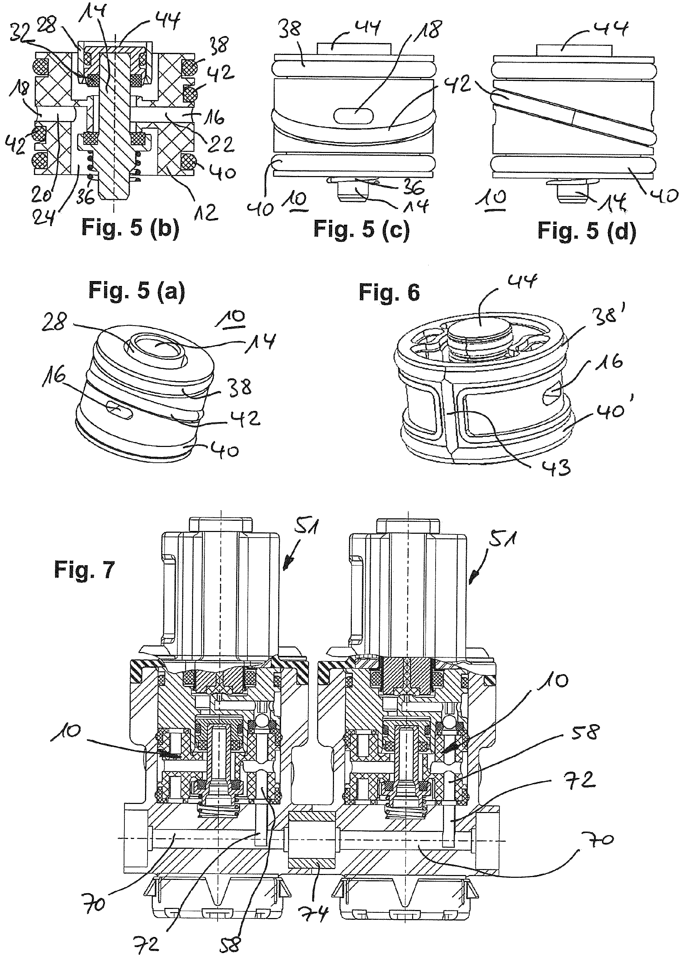

Die Figuren 5(a) bis 5(d) zeigen in verschiedenen Ansichten den Aufbau des modulartigen Ventilgehäuses gemäß einem ersten Ausführungsbeispiel der Erfindung. Dabei zeigt die Fig. 5(a) eine Perspektivansicht, die Fig. 5(b) ist ein Längsschnitt, und die Figuren 5(c) und 5(d) sind gegeneinander um 90° verdrehte Seitenansichten auf den Außenmantel des zylindrischen Ventilgehäuses.

Genauer gesagt ist dieses Ventilgehäuse 10 im Wesentlichen realisiert aus einem durch ein Spritzgießverfahren aus einem harten Kunststoffmaterial realisierten Kunststoffkörper 12, welcher einerseits eine Führung für eine axial im Inneren beweglich gelagerte Stößeleinheit 14 anbietet, andererseits eine Kanal- und Fluidführungsinfrastruktur aufweist, welche auf einer Mantelseite eine erste Öffnung 16 und auf einer gegenüberliegenden Mantelseite eine zweite Öffnung 18, jeweils mit anschließenden, zunächst radial verlaufenden Fluidführungskanälen 20, 22 ausbildet. Diese münden im Fall des Kanals 22 in einer mittigen bodenseitigen Öffnung 24, im Fall des Kanals 22 in Form von achsparallelen Mittelschlitzen bzw. ventilsitzartigen Auslässen 26, welche in beide axiale Richtungen geöffnet sind und die Stößeleinheit 14 umschließen bzw. sich um deren Mantel herum erstrecken.

Wie diesbezüglich insbesondere die Längsschnittansicht der Fig. 5(b) verdeutlicht, trägt der (üblicherweise auch aus einem Kunststoffmaterial hergestellte) und in einer hülsenartigen Führung 28 geführte Stößel 14 ein Paar von ringartigen, aus einem Polymermaterial realisierten Dichtungen 30, 32, wobei diese, aufeinander gerichtet, am langgestreckten Stößel 14 so befestigt sind, dass diese, abhängig von einer Verschiebe- bzw. Verstellposition des Stößels 14 im Gehäuse 12, entweder durch die Dichtung 32 den Auslass 26 verschließen, oder aber durch die (in der Figurenebene untenliegende) Dichtung 30 diesen Auslass 26 gegenüberliegend verschließen. Im Sinne der Erfindung beschreiben diese möglichen Dicht- bzw. Verschlusspositionen eine erste bzw. zweite Aufnahmeposition des Stößels 14 (als Sperrmittel) innerhalb des Ventilgehäuses.

Zusätzlich zeigt insbesondere wiederum die Schnittansicht der Fig. 5(b) gut, wie eine Druckfeder 36, sich von einem Widerlager abstützend, durch Angreifen an einen Abschnitt des Stößels 14 diesen in der Dichtposition vorspannt, bei welcher die (untere) Dichtung 30 den Kanalauslass 26 verschließt.

Insbesondere ein Vergleich der verschiedenen Außenansichten des Ventilgehäuses der Figuren 5(a), (c) und (d) verdeutlicht ferner, wie axial beidends jeweils eine in einer radialen Ebene umlaufende, in einer Ringnut im Gehäuse 12 gehaltene Ringdichtung 38, 40 am Gehäuse ausgebildet ist, während eine zusätzliche, bezogen auf die axiale Richtung (welche etwa in der Figurenebene der Fig. 5(b) vertikal verläuft und durch die Strichpunkt-Linie symbolisiert ist) schräg verlaufende Dichtung 42 dafür sorgt, dass die erste Gehäuseöffnung 16, bezogen auf den Außenmantel des Gehäuses 12, von der mantelseitig gegenüberliegenden Öffnung 18 gedichtet bzw. fluidmäßig entkoppelt ist.

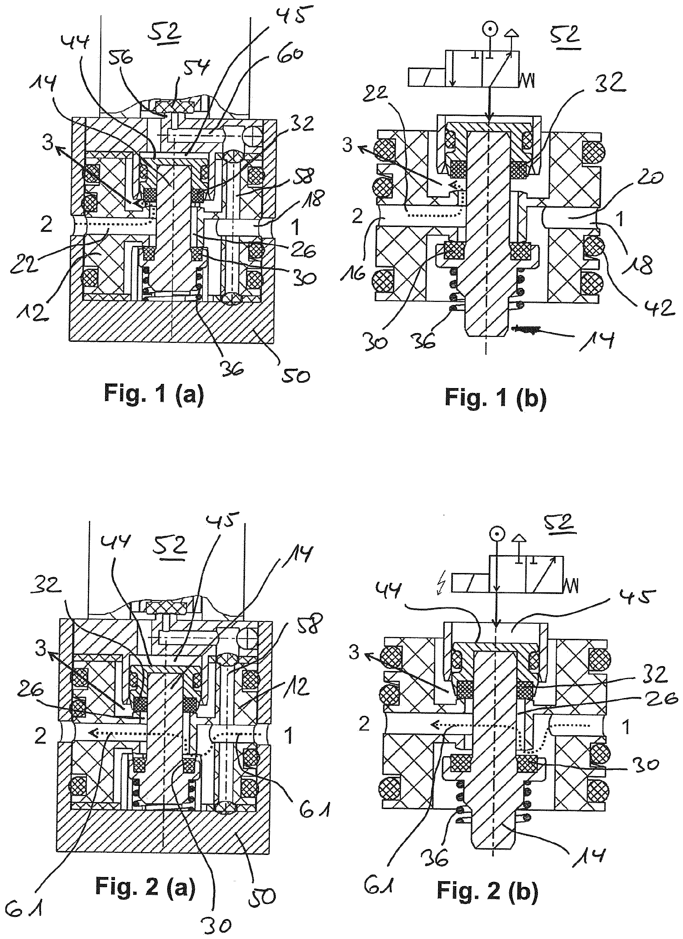

Das in der dargestellten Weise der Fig. 5 aufgebaute Ventilgehäuse wird in nachfolgend zu beschreibender Weise in einem Ventilaußengehäuse aufgenommen und realisiert dort, je nach der Art der Aufnahme bzw. der Montage, entweder ein in Nullstellung geschlossenes Ventil (NC), alternativ ein in Nullstellung offenes (NO) Ventil. Auch ist der im Ventilgehäuse 12 bewegbare Stößel 14 durch angreifendes Fluid an einer (in der Figurenebene der Fig. 5(b) oben liegenden) Angriffs- bzw. Vorsteuerfläche 44 betätigbar. Genauer gesagt erfolgt dieses Vorsteuern durch eine Fluidbeaufschlagung, welche in ansonsten bekannter Weise durch ein dieser Fläche 44 zugeordnetes bzw. vorgeschaltetes, elektromagnetisch betätigtes Vorsteuerventil 52 (Fig. 1 bis 4) erfolgen kann.
Auch die Beschreibung dieser Vorsteuerfunktionalität erfolgt im Zusammenhang mit der Erläuterung der Betriebsmodi der unter Nutzung des Ventilgehäuses der Fig. 5 aufgebauten Ventilvorrichtung nachfolgend anhand der Figuren 1 bis 4.

Hier zeigen zunächst die Figuren 1 und 2 (mit jeweiligen Teildarstellungen) die Nutzung des Ventilgehäuses im Rahmen eines vorgesteuerten 3/2-Wegeventils, welches so montiert ist, dass die relative Aufnahmeposition des Ventilgehäuses 12 in einem umgebenden Außengehäuse 50 die Konfiguration eines in Nullstellung geschlossenen (NC) Ventils realisiert. Genauer gesagt zeigen jeweils die Teilbilder (a) von Fig. 1 und Fig. 2 den NC-Montagezustand, während jeweils die Teilbilder (b), insoweit aufbauend auf der prinzipiellen Schnittdarstellung der Fig. 5(b), den Fluidfluss sowie den angesteuerten Bewegungszustand im Detail illustrieren.

In den Darstellung lediglich schematisch dargestellt, sitzt jeweils auf dem Außengehäuse 50 bzw. einem oberen Bereich des selben ein in ansonsten bekannter Weise als Elektromagnetventil ausgestaltetes Vorsteuerventil 52, bei welchem als Reaktion auf eine Bestromung (nicht gezeigter) stationärer Spulenmittel eine eine Dichtung 54 relativ zu einem oberen Ventilsitz 56 bewegende Ankereinheit eine Fluidbeaufschlagung der Stirnfläche (des Stirnabschnitts) 44 des Stößels 14 bewirkt. Zum Zweck der Fluidzuführung zum Vorsteuerventil zeigen die Schnittansichten (a) von Fig. 1 und Fig. 2 zusätzlich Führungskanäle 58 (achsparallel) bzw. 60 (radial), wobei aus Gründen einer Vereinfachung der Darstellung die isolierten und vergrößerten Längsschnittansichten (b) diesen achsparallelen Längskanal nicht zeigen.

Die Fig. 1 verdeutlicht zunächst, wie, in der Montagekonfiguration als in Nullstellung geschlossenes 3/2-Wegeventil, ein Fluidfluss in der Nullstellung ermöglicht ist. Dabei bedeutet das Bezugszeichen 1 (wie auch bei allen weiteren Darstellungen im Rahmen der vorliegenden Ausführungsbeispiele) einen Druckanschluss bzw. Fluideingangsanschluss für einströmende Luft im Rahmen der Ausgestaltung als Pneumatikventil. Bezugszeichen 2 verdeutlicht den gegenüber 1 geöffneten bzw. geschlossenen Arbeitsanschluss, und in der Art eines Entlüftungsanschlusses zeigt das Bezugszeichen 3 einen weiteren ausgangsseitigen Anschluss, welcher, abhängig von einer Schaltposition, zum Arbeitsanschluss geöffnet oder geschlossen ist. Aufgrund der NC-Konfiguration, also in Nullstellung geschlossen und damit bei deaktiviertem Vorsteuerventil (dessen Anker befindet sich in der Ruheposition, die zugehörige Spule ist unbestromt), drückt die Druckfeder 46 die untere Dichtung 30 gegen die Kanalöffnung 26 von unten. Dies bewirkt, dass am Eingangsanschluss 1 anstehendes Fluid zwar über die Kanäle 58, 60 am Ventilsitz 56 anliegt, aufgrund des geschlossenen Vorsteuerventils jedoch keine weitere Steuerung stattfindet. Darüber hinaus versperrt, wie die Schnittansicht der Fig. 1(a) bzw. (b) verdeutlicht, die aktuelle Relativposition des Stößels 14 zum Gehäusekörper 12 einen Fluidfluss 1 in Richtung auf den Arbeitsanschluss 2, so dass in dieser Position, entsprechend der unbestromten Nullstellung, das Ventil tatsächlich geschlossen ist.

Im linksseitigen Bereich der Fig. 1(a) und (b) wird hingegen deutlich, wie durch die relative Öffnungsposition der oberen Dichtung 32 am Stößel, bezogen auf den Kanalauslass 26 des Gehäusekörpers, eine Fluidkommunikation zwischen dem Arbeitsanschluss 2 und im Entlüftungsauslass 3 ermöglicht ist.

Die Ventil-Schaltbilddarstellung im oberen Bereich der Teilfigur 1(b) zeigt entsprechend den unbestromten Betriebszustand des Vorsteuerventils 52.

Gegenüber der Fig. 1 verdeutlicht die Fig. 2, bei identischer Einsatz- bzw. Aufnahmeposition des Ventilgehäuses 12 im Außengehäuse 50, den vorgesteuerten, aktivierten Schaltzustand des NC-3/2-Wegeventils:
Durch die Kanäle 58, 60 am Ventilsitz 56 anliegendes Fluid wird durch das geöffnete bzw. beabstandete Ventilgummi 54 in Richtung auf die Stirnfläche 44 der Stößeleinheit 14 geöffnet. Ein Vergleich der Längsschnittansichten verdeutlich diesbezüglich, wie ein Fluid-Aufnahmeraum 45 vor dieser Stirnfläche 44 erweitert ist, insoweit verdeutlicht, dass durch den Fluiddruck der Stößel 14 in der Figurenebene (und entsprechend seiner axialen Bewegungsrichtung) axial abwärts geführt wurde, gegen die komprimierende Rückstellkraft der Druckfeder 36. Dies führt zum Schaltzustand der Fig. 2(a) bzw. (b): Hier liegt dann die obere Ventil(ring)dichtung 32 dichtend auf dem den Kanalauslass 26 ausbildenden Mittelteil des Gehäusekörpers 12 auf und sorgt für eine obige Dichtung, während am axial gegenüberliegenden Ende die Dichtung 30 den Kanal 26 freigibt. Dies führt, verdeutlicht durch die gestrichelte Linie 61, zu einem Freigeben der Fluidverbindung zwischen dem Fluideingangsanschluss (hier realisiert durch den Gehäuseeingang 18 samt Kanal 20) zum Arbeitsanschluss 2, in dieser Montageposition realisiert durch den Gehäuseanschluss 16 samt vorgelagertem Kanal 22. Dagegen ist die Verbindung zwischen dem Arbeitsanschluss 2 und dem Entlüftungsanschluss 3 durch Wirkung der oberen Dichtung 32 versperrt.

Bezogen auf den Betriebszustand der Fig. 2, nämlich vorgesteuerte und damit geöffnete Position des 3/2-Wegeventils, verdeutlicht das Schaltsymbol von Fig. 2(b) für das Vorsteuerventil den bestromten Zustand, damit die aktive Wirkung in der Vorsteuerung.

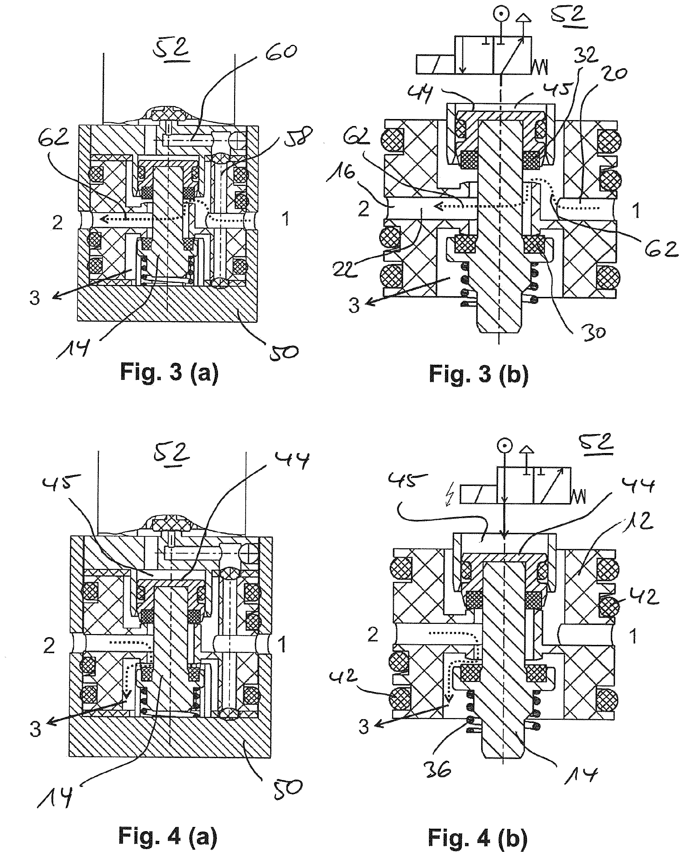

Beim Montagezustand der Figuren 3 und 4 (jeweils wieder mit analogen Teilfiguren (a) und (b)) sind die Montagekomponenten, bezogen auf die Fig. 1, 2, identisch, jedoch ist bei den Figuren 3 und 4 das vom Ventilaußengehäuse 50 umschlossene bzw. aufgenommene Innengehäuse 12 verkippt (bezogen auf eine horizontale Ebene um 180° verdreht).

Dabei betrifft dieses Verdrehen den eigentlichen Gehäusekörper, versehen mit dem Bezugszeichen 12; die Montagerichtung des dann in bzw. auf den Körper 12 aufgesetzten Stößels 14 samt Dichtungspaar 30, 32 ist wiederum so vorgenommen, dass zum oberen, freien Ende des Außengehäuses hin die Steuerfläche (Stirnfläche) 44 mit dem Vorsteuerventil verbunden ist, während bodenseitig die Vorspann-Druckfeder 36 sich von einem inneren Gehäuseboden des Außengehäuses 50 abstützt.

Ein Vergleich der jeweiligen Teilfiguren der Fig. 3 zur Fig. 1 (und analog der Fig. 4 zu Fig. 2) verdeutlicht, dass dieses umgekehrte Einsetzen des Ventilgehäuses relativ zum Außengehäuse aus der NC-Konfiguration der Fig. 1, Fig. 2 eine NO-Konfiguration, also eine stromlos geöffnete Funktionalität, in den Figuren 3, 4 realisiert: Der durch die gepunktete Linie 62 in Fig. 3(a) und (b) verdeutlichte Fluidfluss zwischen dem Eingangsanschluss 1 und dem Arbeitsanschluss 2 verdeutlicht diese stromlos offene Konfiguration: Zwar liegt wiederum, über die Kanäle 58, 60 (wobei wiederum der radial verlaufende Kanal 60 in einer Deckelstruktur, nicht jedoch selbst im inneren Ventilgehäuse 10 ausgebildet ist) ein Fluiddruck am Ventilsitz 56 des Vorsteuerventils 52 an, da dieses jedoch im Betriebszustand der Fig. 3 unbestromt ist, erfolgt keine Öffnung dieses Sitzes 56 durch die Dichtung 54, so dass der Stößel 14 in seiner in der Figurenebene der Fig. 3(a), (b) oberen, durch die Feder nach oben vorgespannten Position verbleibt.

Da damit die obere Stößeldichtung 32 den Eingang 1 zum Kanal 26 öffnet, kann das Fluid, gezeigt durch die gepunktete Linie 62, stromlos offen zum Arbeitsanschluss 2 als Ausgang fließen. Dagegen verschließt, wie die Teilfiguren der Fig. 3 zeigen, die untere Stößeldichtung 30 eine Verbindung zwischen dem Arbeitsanschluss 2 und dem Entlüftungsanschluss 3.

Wiederum analog zur NC-Konfiguration der Fig. 1, 2 verdeutlicht die Fig. 4 mit den Teilfiguren (a) bzw. (b) den gegenüber der Fig. 3 vorgesteuerten Zustand, d.h. den Betrieb bei aktiviertem Vorsteuerventil 52. Der entsprechend geöffnete Ventilsitz 56 in Fig. 4(a) ermöglicht einströmendes Fluid in den Druckraum 45, damit eine (in der Figurenebene axial abwärts gerichtete) Druckbeaufschlagung des Stößels 14 über dessen druckseitige Stirnfläche 44, gegen die Rückstellkraft der bodenseitigen Druckfeder 36. Diese Ventilbetätigung führt zu einem Verschließen des innenliegenden Kanalauslasses 26 durch den oberen Dichtungsring 32 (was die Fluidkommunikation 1-2 unterbindet, während das durch diesen abwärts gerichteten Bewegungs- und Schaltzustand bewirkte Öffnen des nach unten gerichteten Auslasses 26 durch die Dichtung 30 wiederum eine Fluidverbindung zwischen Arbeitsanschluss 2 und Entlüftungsanschluss 3 gestattet).

Aus obiger Darstellung wird deutlich, dass damit durch lediglich eine einzige Konfiguration des Ventilgehäuses, genauer gesagt des bevorzugt als Spritzgussteil aus einem Kunststoffmaterial hergestellten Körpers 12, und abhängig von dessen Relativposition im Umgehäuse (Außengehäuse) 50, beide Ventiltopologien herstellbar sind.

Als Modifikation der mittels einer schrägt verlaufenden mantelseitigen Dichtung 42 versehenen Gehäuseeinheit 10 zeigt die Fig. 6 eine mögliche Variante. Hier ist ein vergleichbares Dichtungsverhalten neben den funktional unveränderten radial verlaufenden Dichtungen 38' und 40' realisiert durch vertikal verlaufende Dichtungsabschnitte 43, welche gleichermaßen die jeweiligen Gehäuseöffnungen 16, 18 voneinander bezogen auf das Fluid dichten.
Die Dichtungskonfiguration der Fig. 6 ist lediglich exemplarisch, und auch hier sind weitere Varianten und Modifikationen denkbar. Die Darstellung der Fig. 6 eignet sich etwa in besonderer Weise für eine in Bezug auf eine Großserienfertigung bevorzugte Realisierung, bei welcher etwa dann die polymeren Abschnitte 38', 40' und 43' nicht etwa als diskrete und später zu montierende Ringe vorliegen, sondern im Wege eines Multi-Materialspritzverfahrens automatisiert zusammengefügt werden können.

Die Fig. 7 zeigt einen möglichen Einsatzkontext der vorliegenden Erfindung in der Art eines aus zwei der erfindungsgemäßen Ventilvorrichtungen realisierten Ventilsystems. Innerhalb eines (weniger schematisch dargestellten) Außengehäuses 50' ist jeweils das Ventil-Innengehäuse 10 angeordnet, und ein oberer Bereich 51 eines jeweiligen der VentilAußengehäuse bietet (in nicht näher gezeigter Weise) eine Aufnahme für das jeweils darin vorzusehende Vorsteuerventil 52 an, samt zugeordneter stationärer Spule, stationärem Magnetkern und gleichermaßen nicht gezeigter elektrischer Steckerkontaktierung.

Die Darstellungen der Fig. 7 verdeutlicht in besonders günstiger Weise, wie die zunächst als Einzelventile gut geeigneten elektromagnetischen Ventilvorrichtungen auch mechanisch und fluidtechnisch günstig zu einer Mehr-Ventilanordnung verschaltet werden können, nämlich dadurch, dass im bodenseitigen Bereich der jeweiligen Außengehäuse 50' quer zur axialen Richtung (in der Fig. 7 wiederum entsprechend der Vertikalrichtung in der Figurenebene) verlaufende Kanäle 70 vorgesehen sind, welche über achsparallele Fluidkanalabschnitte 72 mit den Vertikalkanälen 58 des Fluideingangsanschlusses kommunizieren.

Dies führt dazu, dass im Hinblick auf die Rückseite (Eingangsseite) ein an einem Eingangsanschluss 1 anliegender Fluiddruck über die Kanalanordnungen 58-72-70 dann jeweils zu benachbarten Ventilen übertragen wird, so dass diese nicht jeweils gesondert mit Fluiddruck auf der Eingangsseite versorgt werden müssen. Schematisch zeigt die Fig. 7 zu diesem Zweck die Möglichkeit, aufgeweitete Enden der Querkanäle 70 mit geeigneten Verbindungs- bzw. Druckdichtungen 74 zu verbinden. An einem (nicht gezeigten) Endabschnitt würde dann die Abfolge der Einzelkanäle 70 wiederum endseitig verschlossen.

## Patentansprüche

1. Elektromagnetische Ventilvorrichtung mit einem Ventilaußengehäuse (50), elektromagnetischen Stellmitteln, einem in einem Ventilgehäuse (10) ausgebildeten Fluideingangsanschluss (1) für zu schaltendes Fluid, insbesondere Pneumatikfluid, einem im Ventilgehäuse ausgebildeten Arbeitsanschluss (2) für das Fluid
und im Ventilgehäuse entlang einer axialen Richtung verstellbar geführten Sperrmitteln (14), die zum Zusammenwirken mit einem im Ventilgehäuse ausgebildeten, einen Fluidströmungspfad zwischen dem Fluideingangsanschluss und dem Arbeitsanschluss öffnenden Ventilsitz ausgebildet sind und durch mittels der Elektromagnetischen Stellmittel geschaltetes Fluid bewegbar ausgebildet sind, wobei einer axial gerichteten Antriebskraft der Stellmittel eine auf die Sperrmittel wirkende Rückstellkraft, insbesondere durch Federmittel (36), entgegenwirkt,
wobei der Ventilsitz axial zweiseitig so ausgebildet ist, dass in einer ersten axialen Verstellposition der Sperrmittel relativ zum Ventilgehäuse ein erster Öffnungsbereich und in einer entgegengesetzten zweiten axialen Verstellposition ein dem ersten Öffnungsbereich axial gegenüberliegender zweiter Öffnungsbereich freiliegt,
**dadurch gekennzeichnet, dass**
das modulartig ausgebildete Ventilgehäuse in dem Ventilaußengehäuse (50) mit zum Fluideingangsanschluss sowie zum Arbeitsanschluss fluchtenden Außenanschlüssen so einsetzbar und aufgenommen ist,
dass in einer ersten Aufnahmeposition des Ventilgehäuses im dieses zumindest abschnittsweise umgebenden Ventilaußengehäuse die Rückstellkraft bei nicht aktivierten Stellmitteln Fluidströmungspfad verschließt (NC, Fig. 1) und in einer zweiten Aufnahmeposition des Ventilgehäuses im Ventilaußengehäuse die Rückstellkraft bei nicht aktivierten Stellmitteln den Fluidströmungspfad geöffnet hält (NO, Fig. 3),
wobei die zweite Aufnahmeposition gegenüber der ersten Aufnahmeposition eine geänderte Montage- und Relativposition des Ventilgehäuses im Ventilaußengehäuse, insbesondere verkippt um 180° in einer senkrecht zur axialen Richtung verlaufenden Ebene im Ventilaußengehäuse, vorsieht.

2. Vorrichtung nach Anspruch 1, **dadurch gekennzeichnet, dass** das modulartig ausgebildete Ventilgehäuse (10) eine zumindest abschnittsweise zylindrische Außenkontur aufweist, die zum passenden Zusammenwirken mit dem zumindest abschnittsweise hohlzylindrisch ausgebildeten Ventilaußengehäuse (50) ausgebildet ist.

3. Vorrichtung nach Anspruch 1 oder 2, **dadurch gekennzeichnet, dass** in oder auf einer äußeren Mantelfläche des Ventilgehäuses Dichtmittel (42; 43), insbesondere ausgebildet als schräg umlaufender Dichtring, so vorgesehen sind, dass diese in der ersten und der zweiten Aufnahmeposition den Fluideingangsanschluss und den Arbeitsanschluss, bezogen auf eine Innenfläche des Ventilaußengehäuses, voneinander abdichten.

4. Vorrichtung nach Anspruch 3, **dadurch gekennzeichnet, dass** die Dichtmittel (43) als polymere und/oder gummielastische Komponente ausgebildet und unlösbar am oder im Ventilgehäuse befestigt sind, bevorzugt als Ergebnis eines Mehrkomponenten-Spritzgussverfahrens.

5. Vorrichtung nach einem der Ansprüche 1 bis 4, **dadurch gekennzeichnet, dass** die elektromagnetischen Stellmittel in der Art eines Vorsteuerventils (52) einen endseitig auf einen axialen Stirnabschnitt, insbesondere Stirnfläche (44), der langgestreckt ausgebildeten Sperrmittel wirkenden Fluiddruck aufschalten.

6. Vorrichtung nach einem der Ansprüche 1 bis 5, **dadurch gekennzeichnet, dass** sich an den Fluideingangsanschluss und/oder an den Arbeitsanschluss im bevorzugt als Kunststoff-Spritzgießteil (12) hergestellten Ventilgehäuse zumindest abschnittsweise radial erstreckende Kanäle (20, 22) anschließen, welche einen Abschnitt des Fluidströmungspfades zum Ventilsitz realisieren.

7. Vorrichtung nach einem der Ansprüche 1 bis 6, **dadurch gekennzeichnet, dass** ein Fluidströmungsverlauf in Kanälen des Ventilgehäuses so ausgestaltet ist, dass der Arbeitsanschluss (2) zum ersten und zum zweiten Öffnungsbereich geöffnet ist.

8. Vorrichtung nach einem der Ansprüche 1 bis 7, **dadurch gekennzeichnet, dass** das Ventilgehäuse als einstückig aus einem Kunststoffmaterial hergestellte Baugruppe realisiert ist, welche den Fluideingangsanschluss, den Arbeitsanschluss, den ersten und den zweiten Öffnungsbereich sowie Verbindungskanäle ausbildet.

9. Vorrichtung nach einem der Ansprüche 1 bis 8, **dadurch gekennzeichnet, dass** das Ventilgehäuse einen Entlüftungsanschluss (3) als durch das Verstellen geschaltet mit dem Fluideingangsanschluss oder dem Arbeitsanschluss verbindbaren zusätzlichen Ventilanschluss aufweist.

10. Verwendung der elektromagnetischen Ventilvorrichtung nach einem der Ansprüche 1 bis 9 als durch die elektromagnetischen Stellmittel vorgesteuertes und/oder mit einer eine Nennweite und/oder einen wirksamen Druckquerschnitt erhöhenden Booster-Technologie versehenes Pneumatikventil.

11. System aufweisend eine Mehrzahl der elektromagnetischen Ventilvorrichtungen nach einem der Ansprüche 1 bis 9, deren jeweilige Fluideingangsanschlüsse (1) fluidleitend miteinander verbunden sind, wobei die Verbindung durch eine jedem Ventilgehäuse zugeordnete, quer zur axialen Richtung verlaufende und zum Ankoppeln an jeweils benachbarte der Ventilvorrichtungen eingerichtete Querbohrung (70) realisiert ist.

## Claims

1. An electromagnetic valve device having a valve outer casing (50), electromagnetic positioning means,
a fluid inlet port (1), which is formed in a valve casing (10), for fluid to be switched, in particular pneumatic fluid,
a working port (2), which is formed in the valve casing, for the fluid, and locking means (14), which are movably guided in the valve casing along an axial direction and are formed for interacting with a valve seat formed in the valve casing and opening a fluid flow path between the fluid inlet port and the working port and which are realized so as to be movable via a fluid switched by means of the electromagnetic positioning means,
an axially directed drive force of the positioning means counteracting a return force acting on the locking means, in particular via spring means (36),
the valve seat being formed axially bilaterally such that a first opening area is exposed in a first axial displacement position of the locking means relative to the valve casing and a second opening area, which is arranged opposite to the first opening area, is exposed in an opposing second axial displacement position,
**characterized in that**
the module-like valve casing is used and received in the valve outer casing (50) having external ports, which align with the fluid inlet port as well as the working port, such that
when the positioning means are not activated, the return force closes the fluid flow path in the valve outer casing at least partially surrounding the valve casing when in a first receiving position of the valve casing (NC, Fig. 1),
and when the positioning means are not activated, the return force keeping the fluid flow path open in a second receiving position of the valve casing in the valve outer casing (NO, Fig. 3),
in contrast to the first receiving position, the second receiving position intending a changed mounting and relative position of the valve casing in the valve outer casing, in particular tilted by 180° in the valve outer casing in a plane extending perpendicular to the axial direction.

2. The device according to claim 1, **characterized in that** the module-like valve casing (10) comprises an outer contour, which is cylindrical at least in sections and is realized for fittingly interacting with valve outer casing (50) realized like a hollow cylinder at least in sections.

3. The device according to claim 1 or 2, **characterized in that** sealing means (42; 43), in particular realized as a sealing ring extending inclined, are intended in or on an outer jacket surface of the valve casing in such a manner that the sealing means seal the fluid inlet port and the working port from each other, in relation to an inner surface of the valve outer casing, when in the first and the second receiving position.

4. The device according to claim 3, **characterized in that** the sealing means (43) are realized as polymer and/or rubber-elastic components and are fastened on or in the valve casing in a fixed manner, preferably as the result of a multi-component injection molding process.

5. The device according to any one of the claims 1 to 4, **characterized in that** the electromagnetic positioning means override a fluid pressure, which acts on the end of an axial front section, in particular a front surface (44), of the stretched locking means, in the make of a pilot command valve (52).

6. The device according to any one of the claims 1 to 5, **characterized in that** ducts (20, 22), which extend radially at least in sections and realize a section of the fluid flow path to the valve seat, connect to the fluid inlet port and/or the working port in the valve casing preferably realized as a plastic injection molded part.

7. The device according to any one of the claims 1 to 6, **characterized in that** a fluid flow path is realized such in ducts of the valve casing that the working port (2) is open to the first and the second opening area.

8. The device according to any one of the claims 1 to 7, **characterized in that** the valve casing is realized as a component group formed integrally from a plastic material and forming the fluid inlet port, the working port, the first and the second opening area as well as connection ducts.

9. The device according to any one of the claims 1 to 8, **characterized in that** the valve casing comprises an aeration port (3) as an additional valve port which can be connected to the fluid inlet port or the working port by the additional valve port being switched by being displaced.

10. A usage of the electromagnetic valve device according to any one of the claims 1 to 9 as a pneumatic valve pilot-controlled via the electromagnetic positioning means and/or provided with a booster technology enlarging a nominal size and/or an effective pressure cross section.

11. A system having a plurality of the electromagnetic valve devices according to any one of the claims 1 to 9, whose respective fluid inlet ports (1) are connected to each other so as to conduct fluid, the connection being realized via a transverse bore (70) allocated to each valve casing, extending transversally to the axial direction and installed for being coupled to each adjacent valve device.

## Revendications

1. Dispositif de soupape électromagnétique ayant un boîtier extérieur (50), des moyens de positionnement électromagnétiques, un raccordement d'entrée de fluide (1) réalisé dans un boîtier de soupape (10) pour un fluide à commuter, notamment un fluide pneumatique, un raccordement de travail (2) pour le fluide réalisé dans le boîtier de soupape et des moyens de blocage (14) qui sont guidés de façon déplaçable le long d'une direction axiale dans le boîtier de soupape, lesdits moyens de blocage étant réalisés afin d'interagir avec un siège de soupape qui est réalisé dans le boîtier de soupape et qui ouvre un trajet d'écoulement de fluide entre le raccordement d'entrée de fluide et le raccordement de travail et les moyens de blocage étant réalisés de façon déplaçable par un fluide qui est commuté au moyen des moyens de positionnement électromagnétiques,
une force motrice orientée axialement des moyens de positionnement étant contrecarrée par une force de rappel qui agit sur les moyens de blocage, notamment par des moyens de ressort (36),
le siège de soupape étant réalisé des deux côtés axiaux de telle manière qu'une première partie d'ouverture est exposée dans une première position de déplacement axiale des moyens de blocage par rapport au boîtier de soupape et une deuxième partie d'ouverture, qui est opposée, de manière axiale, à la première partie d'ouverture, est exposée dans une deuxième position de déplacement axiale opposée,
**caractérisé en ce que**
le boîtier de soupape réalisé de façon modulaire peut être inséré et logé dans le boîtier extérieur de soupape (50), qui a des raccordements extérieurs alignés avec le raccordement de travail, de telle manière
**que** lorsque le boîtier de soupape es situé dans une première position de logement dans le boîtier extérieur de soupape qui entoure le boîtier de soupape au moins par sections, la force de rappel ferme le trajet d'écoulement de fluide quand les moyens de positionnement ne sont pas activés (NC, Fig. 1) et que lorsque le boîtier de soupape est situé dans une deuxième position de logement dans le boîtier extérieur de soupape, la force de rappel maintient le trajet d'écoulement de fluide ouvert quand les moyens de positionnement ne sont pas activés (NO, Fig. 3),
la deuxième position de logement prévoyant une position d'installation et relative du boîtier de soupape dans le boîtier extérieur de soupape qui est changée par rapport à la première position de logement, notamment inclinée de 180° dans un plan dans le boîtier extérieur de soupape qui s'étend perpendiculairement à la direction axiale.

2. Dispositif selon la revendication 1, **caractérisé en ce que** le boîtier de soupape (10) réalisé de façon modulaire a un contour extérieur au moins partiellement cylindrique qui est réalisé afin d'interagir de manière adaptée avec le boîtier extérieur de soupape (50) qui est réalisé au moins partiellement en forme d'un cylindre creux.

3. Dispositif selon la revendication 1 ou la revendication 2, **caractérisé en ce que** des moyens d'étanchéité (42 ; 43), notamment réalisés comme bague d'étanchéité obliquement circonférentielle, sont prévus de telle manière dans ou sur une surface d'enveloppe extérieure du boîtier de soupape que lesdits moyens d'étanchéité rendent étanche le raccordement d'entrée de fluide et le raccordement de travail l'un à l'autre par rapport à une surface intérieure du boîtier extérieur de soupape dans la première et la deuxième position de logement.

4. Dispositif selon la revendication 3, **caractérisé en ce que** les moyens d'étanchéité (43) sont réalisés comme composants polymériques et/ou élastiques et que lesdits moyens d'étanchéité sont fixés de manière inamovible sur ou dans le boîtier de soupape, de préférence à la suite d'un moulage par injection à plusieurs composants.

5. Dispositif selon l'une quelconque des revendications 1 à 4, **caractérisé en ce que**, comme une soupape pilote (52), les moyens de positionnement électromagnétiques appliquent une pression de fluide qui agit, du côté d'extrémité, sur une partie frontale axiale, notamment une surface frontale (44), des moyens de blocage allongés.

6. Dispositif selon l'une quelconque des revendications 1 à 5, **caractérisé en ce que** des canaux (20, 22), qui s'étendent au moins partiellement radialement, se joignent au raccordement d'entrée de fluide et/ou au raccordement de travail dans le boîtier de soupape, qui est de préférence une pièce moulée par injection en plastique (12), les canaux réalisant une partie du trajet d'écoulement de fluide vers le siège de soupape.

7. Dispositif selon l'une quelconque des revendications 1 à 6, **caractérisé en ce qu'**un trajet d'écoulement de fluide dans les canaux du boîtier de soupape est réalisé de telle manière que le raccordement de travail (2) est ouvert vers la première et la deuxième partie d'ouverture.

8. Dispositif selon l'une quelconque des revendications 1 à 7, **caractérisé en ce que** le boîtier de soupape est réalisé comme assemblage qui est produit en une seule pièce en matière plastique, ledit assemblage réalisant le raccordement d'entrée de fluide, le raccordement de travail, la première et la deuxième partie d'ouverture et des canaux de liaison.

9. Dispositif selon l'une quelconque des revendications 1 à 8, **caractérisé en ce que** le boîtier de soupape a un raccordement de purge (3) comme raccordement de soupape additionnel qui peut être raccordé de manière commutée au raccordement d'entrée de fluide ou au raccordement de travail par le déplacement.

10. Usage du dispositif de soupape électromagnétique selon l'une quelconque des revendications 1 à 9 comme soupape pneumatique qui est pilotée par les moyens de positionnement électromagnétiques et/ou qui est pourvue d'une technologie booster destinée à augmenter un diamètre nominal et/ou une section transversale de pression efficace.

11. Système comprenant une pluralité de dispositifs de soupape électromagnétiques selon l'une quelconque des revendications 1 à 9, ses raccordements d'entrée de fluide (1) respectifs étant liés l'un à l'autre en communication de fluide, la liaison étant réalisée par un perçage transversal qui est assigné à chaque boîtier de soupape et qui s'étend transversalement à la direction axiale et qui est configuré pour le couplage à des dispositifs de soupape adjacents.
